# EUROPEAN PATENT SPECIFICATION

(11) **EP 4 653 802 B1**
(45) Date of publication and mention of the grant of the patent: **11.11.2026**
(21) Application number: 24177754.9
(22) Date of filing: 23.05.2024
(51) Int. Cl.: G01B 5/00, F16D 1/10

(54) **INDEXED ARTICULATED JOINT**
INDIZIERTES GELENK
ARTICULATION INDEXEE

(43) Date of publication of application: 26.11.2025
(73) Proprietor: Hexagon Manufacturing Intelligence Sàrl, 1020 Renens (CH)
(72) Inventor: Rouge, Claude, 1446 Baulmes (CH); Singh, Abhijeet, 1025 St.-Sulpice (CH); Wunderlin, Léonard, 1131 Tolochenaz (CH)
(74) Representative: P&TS SA (AG, Ltd.)

(56) References cited:
- GB-A- 1 411 331
- US-A1- 2015 176 958

## Description

### Technical domain

The present invention concerns an indexed articulated joint for a measuring apparatus, such as a coordinate positioning apparatus or a coordinate measuring machine. The indexed articulated joint of the invention is especially adapted for use in a wrist or a probe holder mounted on a positioning platform of the apparatus and supporting a metrological tool in a reorientable fashion so as the metrological tool can be positioned and oriented relative to a piece that is measured. The indexed articulated joint of the invention is also adapted for use in an indexable rotary table supporting the piece to be measured. However, the invention may be applied to other domains, such as machine tools and robotics.

### Related art

Coordinate measuring machines (CMM) are a kind of coordinate positioning apparatus that uses a variety of probes attached to a moveable position platform to provide coordinates of points on the surface of a piece that is measured. In known bridge-type coordinate machines, the positioning platform is part of a precise cartesian positioning system and its position, relative to the reference table of the machine, is read by accurate linear encoders. Wrist-type coordinate machines and industrial robots-which are sometimes equipped with coordinate probes for measurement purposes-have a kinematic chain of rotation axes, in series, and determine the coordinates of the positioning platform are deduced from the rotation angles, read by angle encoders. A rotational axis can be, alternatively or complementarily, provided by a probe holder having a rotating adapter for a measuring probe, or by a rotary table supporting the workpiece to be measured.

Touch coordinate probes are used with coordinate measuring machines for checking dimensions or surfaces of machined parts and to capture the three-dimensional shape of pieces, for example to reproduce or model them. Touch coordinate probes have, in general, a mobile feeler designed to be brought into contact with the surface of the piece under test. A sensor reacts to the slightest displacement of the feeler and provides an electric signal that is sent to an operator or to an automatic controller. The sensor can be a trigger circuit, producing an electrical transition whenever a contact happens, or a deflection transducer that yields a measure of the deflection in one, two, or three coordinates. Touch probes with deflection sensor also come under the name of scanning probes or analogue probes and can be used by sliding their feeler along the surface of the piece, whereas those of the former kind, more common, are also called trigger probe and are often used by tapping the surface in discrete points and gather information on a discrete set of points on the surface of the piece under test.

Contactless coordinate probes are also known in the art. They use a contactless sensor to determine the distance between, for instance, a tip of the probe and the surface of the object under test without touching it. This class of probes includes laser interferometric probes, chromatic confocal probes, ultrasound probes, cameras, line scanners and many other.

Coordinate machines can equip other tools different from coordinate probes, for example surface quality probes that measure roughness, or imaging devices for inspection and control. For this disclosure, these tools are equivalent to coordinate probes and interchangeable therewith.

Coordinate probes can be used in the art also in mobile parts of machine tools, for example milling machines, lathes, and machining centres.

Many measurements require changing the orientation of a coordinate probe to measure a workpiece completely and satisfactorily. When measuring features at the blind end of a hole, for example, being able to align the axis of the probe with that of the hole is very useful. Many movable platforms do not offer this capability and coordinate probes are often mounted on an articulated wrist to overcome this lack. Typically, articulated wrists used in these applications have two independent orthogonal axes in series, but realizations with fewer or more degrees of freedom are possible.

Rotation axes of reorientable wrists are often indexed, meaning that they can be locked in a large but finite number of predetermined positions that are accurately repeatable. This requires in general a locking mechanism having indexing elements or components such as a periodic joint, such a Hirth coupling with a periodic arrangement of radial grooves on a ring that form a crown of intermeshing teeth. In the locked state-also denoted as locked configuration in this disclosure-indexed axes are blocked by pushing the two halves of the joint one against the other, while in the free state (or free configuration) they are set apart and are free to rotate one relative to the other. the rotation and the transition between the locked state and the free one can be manual or automatic. Indexation pitches of 1°, 2.5°, 5°, 7.5°, 10° or 15° are known.

Hirth couplings provide precise indexation and fine pitch angles in a small space, but their production requires high-precision grinding and is costly.

Documents EP 1666832 B1, EP 1666833 A1, EP 0392660 A1, EP 1672309 B1, EP2889573 B1, EP 3184960 B1, EP 3179203 B1, US 10557702 B2, WO 2024/033613 A1, EP 3129750 B1, describe articulated devices for coordinate measurement probes.

Some measurements can take benefit from changing a single orientation of the coordinate probe and/or of the workpiece around an axis. In such case, the coordinate probe can be mount of a probe holder having a rotating adapter for supporting the probe. Alternatively, or complementarily, the apparatus can comprise a rotary table for orienting the workpiece around an axis. Rotation axes of reorientable probe holder and rotary table can be indexed, meaning that they can be locked in a large but finite number of predetermined, accurately repeatable positions.

### Short disclosure of the invention

An aim of the present invention is the provision of an indexed articulated joint for an articulated wrist that can provide fine pitch indexation at a lower cost.

According to the invention, these aims are attained by the object of the attached claims, and especially by an indexed articulated joint for an articulated wrist for the reorientation of a metrological tool mounted on a positioning platform, the articulated wrist comprising: a support element capable of being mounted on the positioning platform, a reorientable element rotatably connected to the support element such that the reorientable element can be rotated relative to the support element about a first rotation axis between and locked at one of a plurality of indexable orientations separated equally by a pitch angle, wherein the support element and the reorientable element include a modified Hirth coupling with a pair of mutually intermeshing components that can be unlocked by separating them along the first rotation axis to enable a change from one indexable orientation to another indexable orientation and locked together by urging them one against the other to provide any one of the indexable orientations, characterised in that a first component of the mutually intermeshing components is a toothed ring with a plurality of teeth spaced apart equally by a multiple of the pitch angle (i.e. an integer number more than one) , a second component of the mutually intermeshing components has three or more toothed sectors separated by non-meshing sectors, each toothed sector comprising a plurality of radial teeth spaced apart by the pitch angle configured such that, when the first component and the second component are locked together in any of the indexed positions, each one of the toothed sectors intermeshes with at least one tooth of the first component and there is a clearance between the non-meshing sectors and the first component.

Embodiments of the invention may present the same number of equally spaced teeth in each sector. These highly symmetrical configurations provide a joint having a plurality of indexable orientation with a (substantially) uniform joint rigidity and load charge capacity.

The invention also encompasses embodiments where the teeth are not present in equal number in the different sectors, and/or the non-meshing sectors may have different angular dimensions (i.e. different multiples of the pitch angle) such that the sectors are unequally spaced. These embodiments may exhibit enlarged and/or reduced contacting zone(s) between the pair of mutually intermeshing components, notably for locally modifying the joint rigidity and/or load charge capacity.

The use of a Hirth coupling structure enables finer pitch indexation than what can be obtained with other known periodic couplings, for example of the pins-sphere kind, while the modified Hirth coupling further allows a costs reduction by limiting the number of expensive operations required to machine the modified Hirth coupling with respect to a conventional Hirth coupling.

The integer ratio between the angular spacing of adjacent teeth in the first component and the pitch angle may be denoted by *K.* For the symmetry, K will be an exact divider of the total number of teeth, K being greater than 1. The inventors determined that *K* teeth in each toothed sector are necessary and sufficient to ensure that, for all indexed positions, each toothed sectors intermeshes with at least one tooth of the first component. In this case and in some indexed positions, however, the intermeshing involves two distinct teeth on the first component, each touching the second component with one flank while, in other indexed positions, each toothed sector intermeshes with both flanks of exactly one tooth of the first component. The former configuration is slightly less desirable, however, because the forces of contact on each tooth of the first component do not balance in the horizontal plane, and a deflection may ensue.

To avoid this, it may be advantageous to increase the number of teeth in each toothed sector to *K+1* or even *K+2.* In this case, there is always one tooth of the first component that touches a toothed sector with both flanks.

The disposition of the invention provides reliable positioning because, at each indexed position, the two components intermesh at several positions equally spaced apart on the circumference, one per each toothed sector. Yet, the number of teeth is considerably lower than in a complete Hirth coupling. To provide some numerical examples, a complete Hirth joint with a pitch of 2.5° would require grinding 144 teeth in each of the two components. incomplete toothing of the invention can provide a considerable reduction in the number of teeth, and a corresponding saving in the manufacturing cost. Three toothed sectors equally spaced apart (at 120°, i.e. joint providing a tripod-shaped coupling) are sufficient, in theory, for a precise positioning, but more may be preferable. Configurations with four (i.e. tetrapod-shaped coupling), five (i.e. pentapod-shaped coupling), six (i.e. hexapod-shaped coupling) or more toothed sectors may be advantageous although, above six toothed sectors, the reduction in the number of teeth that is sought is less pronounced.

Per each given angular pitch and number of toothed sectors, there will be one value (or two adjacent values of K) that minimise the total number of teeth, and the cost of production. In embodiments, the second component may have exactly four, five or six toothed sectors and the ratio K may be exactly four, six or eight. The pitch angle could be 5°, 2.5°, 2°, 1°, or other.

The toothed sectors are configured to provide the desired number of indexed positions. In each of these, each toothed sector intermeshes with at least one of the teeth of the other component of the modified Hirth coupling. This can be achieved, for example, by spacing apart the toothed sectors equally around the circumference and having at least *K* teeth spaced apart by the pitch angle in each sector. This is not the only possibility, however. A coupling with a pitch angle *θ* = 2.5° and five toothed sectors, for example, would have the sectors slightly shifted from the symmetric positions, because 72° is not an exact multiple of the pitch angle. Asymmetric variants may need more than K teeth per sector to ensure a correct intermeshing in all the indexing positions.

The profile of the teeth in the two components is not constrained by the invention, provided they intermesh reliably. A triangular profile is possible, the angle at the apex line where the two oblique flanks of each tooth meet may be smaller than 90°, for example 60°. According to the invention, teeth are any (radial) protuberances designed for enabling up to facilitate intermeshing movement between the first and second component of the modified Hirth (e.g. tapered protuberances, i.e. protuberances having a narrow distal extremity), the protuberances having flanks designed to provide at least a partial contact (e.g. a point-, line-, spot-shaped contact) with flanks of intermeshed opposite teeth. Teeth of different components can have different shapes if they enable intermeshing with at least partial contacts between flanks of opposite teeth. Teeth can be manufactured by machining (notably milling or grinding) metallic (e.g. stainless steel) cylindrical pieces, other material and manufacturing process are possible (e.g. additive manufacturing, injection moulding), notably for reducing costs, however. Additional process can be used, e.g. for reducing wear and/or facilitating intermeshing, such as teeth coating and/or lubrication.

The rotation of the wrist and/or its locking and unlocking may be provided by automatic actuators, for example electric motors, or by a manual mechanism. In both cases, more advantageously in the former, the wrist may comprise an angle encoder to measure the relative rotation from which the orientation of the probe can be deduced. Moreover, the joint can alternatively or complementarily comprise a sensor sensing a relative 6dof position (i.e. a relative position along 3 orthogonal linear axes and around 3 orthogonal rotational axes) of the two mutually intermeshing components of the modified Hirt. This 6dof sensor can thus be used not only as angle encoder but also as sensor supporting collision detection and/or measurement error corrections. In one embodiment, the reader of the 6dof sensor can be fixed on one of the two mutually intermeshing components, while the related scale can be fixed on the other of the two mutually intermeshing components. A second orthogonal indexed axis of rotation may be included, in series with the first one, to increase the possible orientations of the probe in space. To this end, the articulated wrist may have an additional reorientable element rotatably connected to the first one such that an orientation of the additional element relative to the reorientable element can be changed between, and locked at one of, a plurality of indexable orientations about the second axis. The tool in this case will be affixed to the additional reorientable element.

The indexed articulated joint of the invention can also be used in a probe holder having a rotary adapter in form of an indexable reorienting adapter, the probe holder being mounted on the positioning platform of the measuring apparatus, eventually supported by an articulated wrist. The indexed articulated joint of the invention can also be used, alternatively or complementarily, in in a rotary table providing an indexable reorientation of the supported workpiece within the measuring volume of the measuring apparatus. The rotary table being configured to be mounted on a reference table of the measuring apparatus and/or to a surface thereof.

A preferred use of the invention is in an articulated wrist for a coordinate measuring machine to reorient a coordinate probe, such as a touch probe, or a contactless coordinate probe, or a camera, and/or to reorient a workpiece to be measured, and this use case will be given special space in the following detailed description. Other applications are possible, however.

### Short description of the drawings

Exemplar embodiments of the invention are disclosed in the description and illustrated by the drawings in which:
**Figure 1** shows schematically a coordinate measuring machine with the automatic reorientable wrist of the invention measuring a workpiece under the supervision of a digital controller,
**Figure 2** shows schematically a reorientable wrist as used in the present invention,
**Figure 3** shows a variant of a modified Hirth coupling used in the invention,
**Figures 4a-4d** shows, in an idealized fashion, the relative position of the intermeshing components, in four indexable positions,
**Figure 5a** is like figure 4d and represents a variant of the invention with a different disposition of teeth in one of the intermeshing components, and
**Figure 5b** is an enlarged view of detail "C" in figure 5a.

In the figures, remarkable elements are identified by reference signs that are repeated in the text. The same reference sign may be used to identify distinct elements that are identical, similar, or technically equivalent. When many identical, similar, or equivalent elements are present in a figure, some reference signs may have been omitted to avoid overcrowding the drawing.

### Examples of embodiments of the present invention

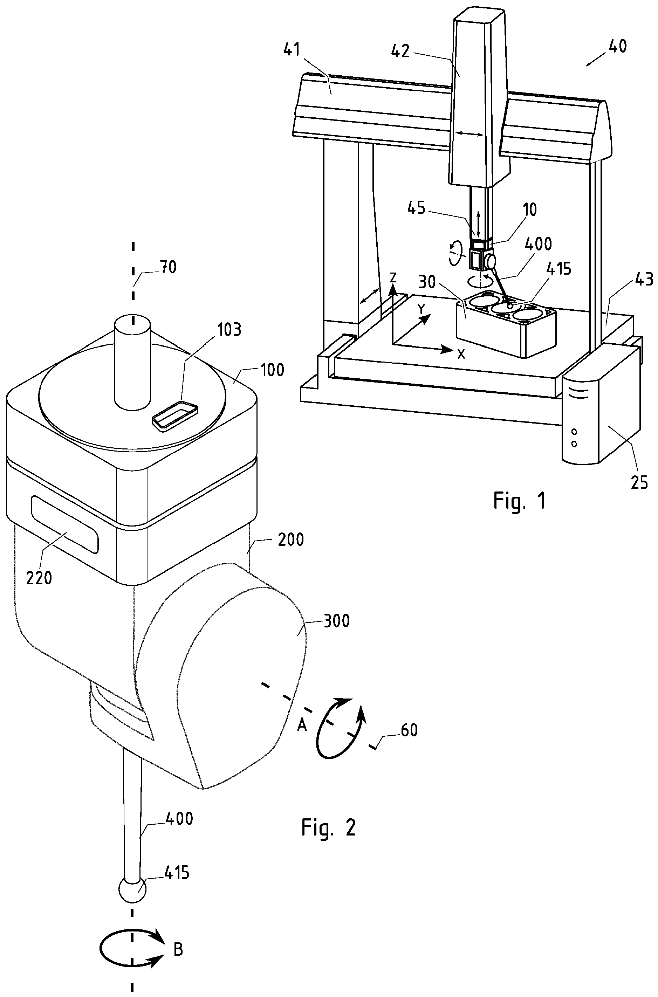

**Figure 1** shows a coordinate-measuring system including a coordinate measuring machine **40** of a known type. The coordinate measuring machine **40** has a horizontal table **43** on which the workpiece **30** that is measured rests. The bridge **41** moves along one first linear axis (Y) on the table **43,** and the carriage **42** moves along a second linear axis (X) orthogonal to the first one. The vertical spindle **45** (also called quill or Z-ram, according to different conventions) moves on a third orthogonal axis (Z), such that the end extremity of the spindle **45** is a positioning platform that can be positioned at any desired point in the measuring volume of the machine (i.e., in the volume where the CMM is able to provide a measure of a surface of an object). Suitable encoders (not represented) read the positions of the bridge **41,** carriage **42** and spindle **45** along the measuring axes X, Y, Z. Most CMM machines are automatic and the motion of bridge **41,** carriage **42** and spindle **45** is determined by electric motors, but manual machines exist. A machine controller **25** is programmed to command the motors according to a predefined measuring plan that is designed in consideration of the shape of the workpiece **30.**

Figure 1 also shows a touch probe **400** that has a spherical tip **415** designed to touch the workpiece **30** at the desired points. The touch probe **400** is often a trigger probe, configured to generate an electric signal on contact. This signal is used by the controller **25** to store the instantaneous values of X, Y and Z, and compute the corresponding coordinates of the contact point, by known methods.

The trigger probe **400** could be replaced by another kind of coordinate probe, for example an optical non contacting probe, a scanning probe, a "hard" probe and so on, without leaving the scope of the invention. The shape and length of the stylus is not limited, either.

The bridge structure of figure 1, while common, is not the only possible. The invention is not limited to this execution but includes all the variety of shapes and structures found in coordinate measuring systems. The invention explicitly comprises systems in which the carriage slides along a horizontal beam that is cantilevered, rather supported at both ends, articulated arm machines exclusively based on rotational degrees of freedom instead of linear ones such as articulated-arm coordinate machines and robots, parallel robots such as delta robots and Stewart platforms, and so on.

The size of the machine can also vary, from benchtop machines to large devices used to measure vehicles, aircrafts, or turbines, without departing from the scope of the invention. The articulated wrist can be mounted vertically or horizontally on the positioning platform of the system. The invention explicitly comprises systems comprising moveable tables, e. g., rotary table, for movably supporting the workpiece during operations (e. g. measurements).

Precision and accuracy in CMM range from sub-micron accuracy in laboratory equipment to maybe 5-100 µm in some industrial application. The invention is applicable to all the variants disclosed herein and, in general, to any kind of mobile platform that can be moved with suitable repeatability and precision.

The use of the reorientable wrist of this invention is not limited to its installation on a coordinate-measuring machine, although this is a preferred and important use case. The wrist could be used on machine tools, industrial robots, machine vision systems, or whenever there is a need to accurately reorient an instrument.

**Figure 2** shows the general structure of an articulated wrist as used in the present invention in combination with a generic coordinate measuring machine. The wrist includes a support element **100** that is configured to be affixed on a positioning platform of a coordinate measuring machine. In many implementations, which include the cartesian coordinate machines, the support element **100** will be translated by the coordinate machine along a desired trajectory without rotation, and the articulated wrist is used to reorient the measure probe according to the needs, for example to insert the probe in a bore, or between the aerodynamic vanes of a turbine. In other cases, the motion of the positioning platform to which the wrist is affixed may include rotations, and in these cases the wrist may be used to compensate for them. The connection between the wrist and the positioning platform can be obtained in any suitable way.

The wrist has a connector **103** to power and control the internal actuators that are responsible for reorienting the probe, and for powering and reading the coordinate probe itself. In the simple case in which the coordinate probe is a touch trigger probe, the only connection that is needed is a current loop that is opened as soon the probe touches the workpiece (i.e. trigger event), but more sophisticated powering and signalling schemas can be used. the connector **103** may include also optical fibre connections, for example in combination with an optical probe, measuring the distance to a workpiece by interferometry, triangulation, time of flight, chromaticity, focus variation, or in any other suitable manner. This does not imply that the connector **103** is essential, though. The inventive wrist could possibly dispose of the connector **103** entirely using a battery and some form of wireless data transmission, for example. The connector **103** may include optical channels, or else the wrist may have an additional connector for optical signals. In alternative, an optical probe equipped on the wrist may be connected to a dedicated measuring apparatus by an optical fibre bypassing the wrist.

The support element **100** is pivotably connected with a reorientable element that can turn relative to the support element about axis "B". The axis "B" is drawn vertically in the figure, and this is its conventional orientation; therefore, it may be also called a "vertical rotation axis", although the wrist can be used in any orientation in space.

Importantly, the rotation axis "B" is of the indexed variety, meaning that, besides a "free" status, in which the reorientable element can turn about axis "B", the wrist has also a locked status, in which the relative position of the first rotor **200** relative to the support element is determined by an internal periodic joint. In the locked status, the rotor is immobile in one of a predetermined plurality of precise and repeatable angles relative to the support **100.** The angle of rotation about the axis "B" is preferably adjustable by internal actuators in the wrist and is controlled by digital signals, but the invention covers also manually actuated wrists that are unlocked, reoriented, and locked again in another indexed position by hand.

Preferably, the wrist comprises also an additional reorientable element 300 that is pivotably attached to the first one. The additional reorientable element 300 is capable of being turned about a second axis "A" that is preferably orthogonal to the first axis "B" and is therefore conventionally horizontal. As in the case of the other axis, the rotation of the additional reorientable element **300** is preferably indexed.

The coordinate probe **400** is attached to the additional reorientable element, when present. The drawing shows a touch probe that yields a contact signal whenever the sphere **415** touches the workpiece, or a deflection signal when the sphere, sliding on the surface of the workpiece, is moved away from its rest position. The wrist could be equipped with any kind of coordinate probe, either contact-based or contactless, or with other probes, such as a surface quality probe or a camera.

Through the serial composition of the rotation angles about the axis "B" and "A", the probe **400** can be aligned with any desired direction in space, with the precision and granularity provided by the indexation. Preferably, the rotation about the axis "B" spans more than one revolution, and even more preferably it is unbound. The rotation of the additional reorientable element about the axis "A" may have a forbidden sector upwards, which matters little when the wrist is attached below a positioning platform, as it is usual.

Optionally, the reorientable wrist may have one (or more) visual indicator(s) **220,** that can be activated by a controller of the coordinate machine or autonomously, by a wrist controller circuit. This may be used to signal a contact of the touch probe **415,** for example. Complementarily or alternatively, the visual indicator **220** can be activated by a controller of the wrist, for example an operational configuration of the wrist (e.g.) and/or an operational status or configuration of the wrist and/or a sensed environmental factor (e. g. a locked or a free configuration of the wrist, below/upper than a given humidity or temperature level, operational abnormality of an active component of the wrist such as an actuator.

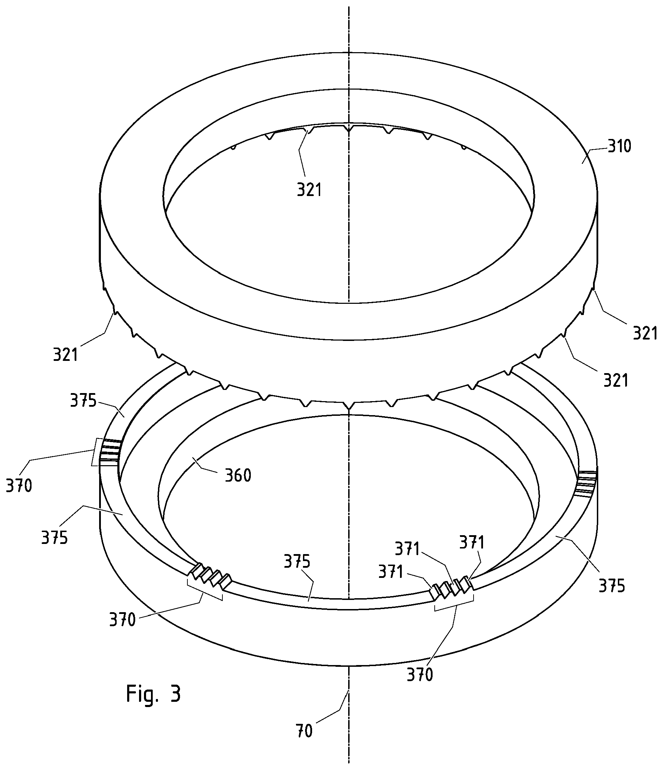

**Figure 3** shows a modified Hirth coupling used to provide the indexation in the invention, the support element **100** and the reorientable element **200** include one each of a pair of mutually intermeshing components **310, 320.**

The intermeshing components **310, 320** are disposed coaxially relative to the rotation axis **70** and be unlocked by separating them along the rotation axis **70** to enable a change from one indexable orientation to another indexable orientation and locked together by urging them axially one against the other to provide any one of the indexable orientations.

The first intermeshing component **310** is a toothed crown with a plurality of teeth **321** spaced apart equally by an integer multiple of the pitch angle, oriented towards the second intermeshing component **360.** The ratio between the pitch angle and the spacing of the teeth **321,** which is an integer value, as mentioned above, may be denoted in the following by *K.*

The second intermeshing component **360** has various toothed sectors **370** separated by non-meshing sectors **375.** In the example, the second intermeshing component **360** has four toothed sectors and an equal number of non-meshing sectors, disposed in a fourfold symmetric pattern. The number of toothed sectors in the invention is not prescribed. Three toothed sectors are enough for providing the coupling's stability when the intermeshing components are locked together (i.e. tripod-based coupling), more toothed sectors are preferred for increasing stability (notably tetra-, penta- or hexapod-based coupling), however.

The modified Hirth coupling of this embodiment provides **144** indexed positions spaced apart by a pitch angle *θ* = 2.5° with a reduced number of teeth. Finer and coarser indexation pitches are also possible, however. The first (upper) component **310** is a crown with teeth **321** equally spaced apart by an angle equal to *K* × *θ,* where *K* is an integer greater than 1. In this case *K* = 4, such that the angle is equal to 10°. Along the circumference and looking down, towards the complementary intermeshing component. The second (lower) component **360 is** also shaped as circular crown with six toothed sectors **370** around the circumference. Each toothed sector has *K =* 4 teeth **371** spaced apart by the pitch angle *θ* = 2.5°.

In each of the indexing positions, each of the toothed sectors **370** is in contact with one or two of the upper teeth **321** and the relative position of the intermeshing component is accurately determined. Yet, the combination of figure 3 has a total of sixty teeth on both components, to be compared to the 288 teeth that a Hirth coupling with a pitch of 2.5° would normally require.

In other non-represented variants, the number of teeth in each toothed sector **370** may be different than four, for example two, three, five, six, or more. The spacing of the teeth in the first component should be no more than the width of the toothed sectors, to ensure intermeshing in all the indexed positions. Therefore, combinations with a small number of teeth in each of the sectors **370** may be less desirable, because they necessarily have more teeth in the opposite component.

The inventors have determined favourable combinations that provide a precise intermeshing in all the indexed positions with a reduced number of teeth. They include, for an indexation pitch *θ* =2.5°:

**Table 1**

| Sectors | Teeth per sectors (=*K*) | Upper spacing (*K* × *θ*) | Teeth total ( *θ* =2.5°) |
|---|---|---|---|
| 3 | 6 | 6 × *θ* | 42 |
| 3 | 8 | 8 × *θ* | 42 |
| 4 | 6 | 6 × *θ* | 48 |
| 6 | 4 | 4 × *θ* | 60 |
| 6 | 6 | 6 × *θ* | 60 |
| 8 | 4 | 4 × *θ* | 68 |

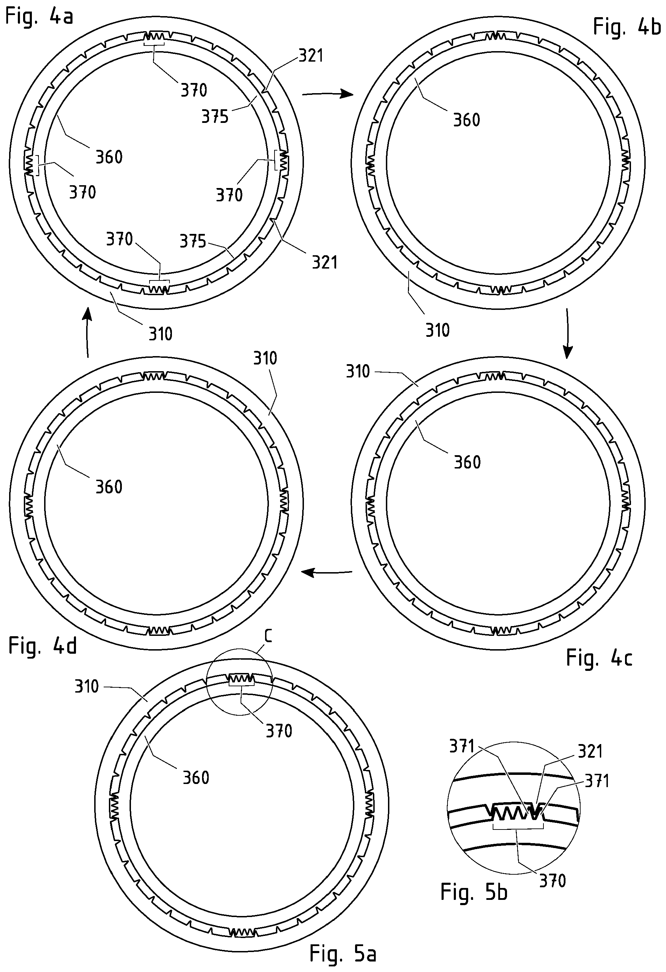

**Figures 4a-4d** show the intermeshing of the modified Hirth coupling of the invention in an example with four sectors of four teeth each, wherein the ratio *K* is equal to 4. These figures are a conceptual illustration of the device rather than a realistic one: the two components have been flattened to allow a bidimensional representation, and the teeth extend radially rather than axially. Their purpose is to show how a reduced number of teeth can give rise to the full set of indexed position as in a complete Hirth coupling.

Figure 4a shows the modified Hirth coupling in one indexed position. The first component **310** has four teeth intermeshing with the first and second teeth of each of the sectors **370** of the second component **360.** The other teeth of the first component are in face of the non-meshing sectors **375** and do not contribute to the indexation. Since the contact points between the two components are distributed symmetrically around the circumference of the crowns, the positioning is stable and reliable.

Figure 4b shows the next indexing position, rotated clockwise by *θ* = 2.5 relative to that of figure 4a. Four teeth of the first component **310** intermesh with the second and third teeth of the sectors **370.** A further step of *θ* = 2.5 produces the configuration of figure 4c, and another step of *θ* = 2.5 the configuration of figure 4d. As the number of teeth of each sector corresponds exactly to ratio *K*, in such illustrated configuration of figure 4d, the left flank of the first tooth and the right flank of the last tooth in each of the sectors **370** touch a corresponding flank of two successive teeth in the first component **301.** In this case the positioning is also symmetrical and reliable.

After a further rotation by *θ* = 2.5 the first component **310** has turned by an angle equal to the separation between its teeth, and the configuration of figure 4a is repeated.

**Figures 5a and 5b** show a variant of the invention in which the toothed sectors have one (or two, or more) extra teeth (i.e. *>K*)*.* In this case, the integer ratio *K=4*, the spacing between the teeth of the first component is *K* × *θ* = 10°, and the toothed sectors have each *K*+ 1 = 5 teeth **371.** The consequence of this increase is that in all indexed position there is one of the teeth **321** of the first component that is inserted between two teeth **371** of the second component. The contact forces on this contact tooth are symmetrical-which was not the case in the configuration of figure 4d-and the indexation is more precise.

In the illustrated embodiments of **Figure 4a****-d** and **Figures 5a and 5b****,** the second intermeshing component 360 comprises four toothed sectors 370 regularly separated by non-meshing sectors 375 of a same length (i.e. a length corresponding to a same multiple of the pitch angle), each toothed sector 370 comprising a same number of teeth 371. These joint embodiments provide a plurality of indexable orientation with a (substantially) constant joint rigidity and load charge capacity.

Alternatively, one or more toothed sectors 370 may have a different number of radial teeth and/or one or more of the toothed sectors 370 can be unequally spaced apart by one or more non-meshing sectors have a different length. This alternative embodiment provides thus one or more relative enlarged and/or reduced contacting zone(s) between the pair of mutually intermeshing components notably for locally modifying the joint rigidity and/or load charge capacity of the joint.

The relative rotation between the first component **310** and the second component **360** of the partial Hirth can be driven-preferably-by an automatic actuator such as an electric motor, or by a manual mechanism. In both cases, the joint may comprise an angle encoder configured to measure the relative angular position during the reorientation (unlocked Hirth) and/or when repositioned (locked Hirth). In case of a motorized articulated wrist, the wrist or the machine controller **25** of the CMM **40** can be configured to read the relative angular position provided by such encoder for driving the reorientation though the actuator and/or for confirming a correct locking at a desired indexed angular position.

In a possible variant of the invention, the encoder is a six degrees-of-freedom sensor (6dof) providing a position and an orientation of the second component **360** relative to the first one **310.** This information may be used for collision detection, correction of measurement error when the Hirt is locked or in any other useful way. The machine controller **25** of the CMM **40** may be configured to regularly read the sensor (e.g. each millisecond) when the Hirth is locked. Fast scanning times are especially useful when the encoder is used to detect collisions.

The 6dof sensor may include a reader affixed to the first component **310** and a scale affixed to the second one **360,** or the other way around.

The indexed articulated joint can comprise an axially extending peripheral protection for protecting the modified Hirth coupling against dust and/or fluid penetration (not illustrated). The protection can comprise a cylindrical flange being peripherally fixed to one of the first and second component **310, 360** while extending towards the other one to envelop its peripheral side both in locked and unlocked configuration. Complementarily, the other component can comprise an additional peripheric flange or joint configured to cooperate with such flange for increasing tightness. Alternatively, the extending peripheral protection can comprise a bellows being fixed to both the peripheries of the first and second component **310, 360** to provide the required tightness.

The modified Hirth coupling can also be used in a probe holder (not illustrated) to provide a reorientation of a probe **400** around one single axis (e.g. "S"-axis), eventually in addition to the one(s) provided by the wrist (e.g. "C"-axis). In such case, one of the first and second component **310, 360** is fixed to a support element of the rotary adapter of the probe holder, the support element being capable to be mount to the position platform **45** of the CMM **40,** alternatively or complementarily to the first or second reorientable element **200,300** of the wrist **10.** The other of the first and second component 310, 360 is then fixed to a probe support on which the probe can be mount, or directly to the probe.

The modified Hirth coupling of the invention can also be used in the rotary table so as to provide an indexable reorientation of the workpiece to be measured. One of the first and second component **310, 360** can be thus attached to a support element being configured to fix the rotary table on a reference table **43,** or to another surface of the measuring apparatus **40.** The other of the first and second component **310, 360** can then be connected to a workpiece support configured to hold the workpiece for measurements.

### Reference symbols in the figures

- 10: articulated wrist
- 25: machine controller
- 30: workpiece
- 40: coordinate measuring machine, CMM
- 41: bridge
- 42: carriage
- 43: table
- 45: Z-ram, quill, positioning platform
- 60: "A" axis (horizontal)
- 70: "B" axis (vertical)
- 100: support element
- 103: connector
- 200: reorientable element
- 220: visual indicators
- 300: additional reorientable element
- 310: first intermeshing component
- 321: equally spaced teeth on the first intermeshing component
- 360: second intermeshing component
- 370: equally spaced toothed sectors
- 371: teeth on the second intermeshing component
- 375: non-meshing sectors
- 400: stylus, end sensor
- 415: touch tip

## Claims

1. An indexed articulated joint (10) for the reorientation of a metrological tool of a measuring apparatus and/or of a workpiece within a measuring volume of a measuring apparatus, the indexed articulated joint (10) comprising:
- a support element (100) capable of being mounted on the measuring apparatus or on a component thereof,
- a reorientable element (200) rotatably connected to the support element (100), wherein the reorientable element (200) can be rotated relative to the support element (100) about a first rotation axis (70) between and locked at one of a plurality of indexable orientations separated equally by a pitch angle,
- a modified Hirth coupling with two mutually intermeshing components (310, 360), one in the support element, another in the reorientable element, **characterised in that**
a first component (310) of the modified Hirth coupling has a plurality of teeth (321) spaced apart equally by a multiple, the multiple being an integer number more than one, of the pitch angle, a second component (360) of the modified Hirth coupling has three or more toothed sectors (370) separated by non-meshing sectors (375), each toothed sector (370) comprising a plurality of teeth (371) spaced apart by the pitch angle wherein, when the first component (310) and the second component (360) are locked together in any of the indexed positions, each one of the toothed sectors (370) intermeshes with at least one tooth (321) of the first component and there is a clearance between the non-meshing sectors (375) and the first component (310).

2. The indexed articulated joint of the preceding claim, wherein each toothed sector includes at least K teeth, where K denotes an integer ratio between the angular spacing of adjacent teeth in the first component and the pitch angle.

3. The indexed articulated joint of the preceding claim, wherein each toothed sector includes K+1 teeth or K+2 teeth.

4. The indexed articulated joint of any one of the preceding claims, wherein the toothed sectors are equally spaced apart in angle.

5. The indexed articulated joint of any one of the claims 1 to 4, wherein at least one of the toothed sectors is constituted by a different number of teeth and/or is unequally spaced apart in angle.

6. The indexed articulated joint of claim 2, wherein the second component has exactly three, four, or six toothed sectors and the ratio K is exactly four, six or eight.

7. The indexed articulated joint of any one of the preceding claims, wherein the pitch angle is 5°, 2.5°, 2°, or 1°.

8. The indexed articulated joint of any one of the preceding claims, wherein the teeth have oblique flanks meeting at an angle that is smaller than or equal to 90°.

9. The indexed articulated joint of any one of the preceding claims, comprising automatic actuators for driving the rotation of the reorientable element about the first rotation axis and/or for locking the support element and the reorientable element together by urging one against the other.

10. The indexed articulated joint of any one of the preceding claims, comprising an angle encoder configured to measure a rotation angle of the reorientable element relative to the support element about the first rotation axis.

11. The indexed articulated joint of any one of the preceding claims, comprising an axially extending peripheral protection fixed to the first and/or the second component (310, 360) for protecting the modified Hirth coupling against dust and/or fluid penetration, notably being a bellows.

12. An articulated wrist (10) or a probe holder for a reorientation of a metrological tool mounted on a positioning platform (45) of a measuring apparatus (40), the articulated wrist (10) or the probe holder comprising an indexed articulated joint according to one of the previous claims, wherein the support element (100) is capable of being mounted on the positioning platform (45).

13. The articulated wrist of the preceding claim, presenting an additional reorientable element rotatably connected to the reorientable element such that an orientation of the additional reorientable element relative to the reorientable element can be changed between, and locked at one of, a plurality of indexable orientations about a second rotation axis orthogonal to the first rotation axis, the tool being affixed to the additional reorientable element.

14. A rotary table for the reorientation of a workpiece (30) within a measuring volume of a measuring apparatus (40), the rotary table comprising an indexed articulated joint according to one of the claims 1 to 11, wherein the support element (100) is capable of being mounted on a reference table (43) or surface of the measuring apparatus.

15. Use of the articulated wrist of any one of the claims 12 and 13 in a coordinate measuring machine to reorient a coordinate probe.

## Patentansprüche

1. Indexiertes Scharniergelenk (10) zur Neuausrichtung eines metrologischen Werkzeugs eines Messsystems und/oder eines Werkstücks innerhalb eines Messvolumens eines Messsystems, wobei das indexierte Scharniergelenk (10) folgende Komponenten umfasst:
- ein Tragelement (100), welches auf dem Messsystem oder auf einer Komponente davon montiert werden kann,
- ein neu ausrichtbares Element (200), welches drehbar mit dem Tragelement (100) verbunden ist, worin das neu ausrichtbare Element (200) in Bezug auf das Tragelement (100) um eine erste Rotationsachse (70) zwischen indexierten Ausrichtungen gedreht und in einer dieser Ausrichtungen gesperrt werden kann, welche gleichmässig durch einen Teilungswinkel voneinander beabstandet sind,
- eine modifizierte Hirth-Kupplung mit zwei gegenseitig ineinandergreifenden Komponenten (310, 360), eine im Tragelement, eine andere im neu ausrichtbaren Element, **dadurch gekennzeichnet, dass**
eine erste Komponente (310) der modifizierten Hirth-Kupplung eine Vielzahl von Zähnen (321) aufweist, welche gleichmässig durch ein Vielfaches, wobei das Vielfache eine ganze Zahl grösser als eins ist, des Teilungswinkels voneinander beabstandet sind, eine zweite Komponente (360) der modifizierten Hirth-Kupplung drei oder mehr Zahnbereiche (370) umfasst, welche durch Nichteingriffsbereiche (375) getrennt sind, wobei jeder Zahnbereich (370) eine Vielzahl von Zähnen (371) aufweist, die durch den Teilungswinkel voneinander beabstandet sind, worin beim Sperren der ersten Komponente (310) und der zweiten Komponente (360) in einer beliebigen indexierten Position jeder der Zahnbereiche (370) mit mindestens einem Zahn (321) der ersten Komponente ineinandergreift und zwischen den Nichteingriffsbereichen (375) und der ersten Komponente (310) ein Spiel vorhanden ist.

2. Indexiertes Scharniergelenk gemäss dem vorhergehenden Anspruch, worin jeder Zahnbereich mindestens K Zähne umfasst, wobei K eine ganze Zahl ist, welche dem Verhältnis zwischen dem Winkelabstand benachbarter Zähne in der ersten Komponente und dem Teilungswinkel entspricht.

3. Indexiertes Scharniergelenk gemäss dem vorhergehenden Anspruch, worin jeder Zahnbereich K+1 Zähne oder K+2 Zähne umfasst.

4. Indexiertes Scharniergelenk gemäss irgendeinem der vorhergehenden Ansprüche, worin die Zahnbereiche gleichmässig winkelabständig voneinander beabstandet sind.

5. Indexiertes Scharniergelenk gemäss irgendeinem der Ansprüche 1 bis 4, worin mindestens einer der Zahnbereiche durch eine unterschiedliche Anzahl von Zähnen gebildet wird und/oder winkelungleichmässig beabstandet ist.

6. Indexiertes Scharniergelenk gemäss Anspruch 2, worin die zweite Komponente genau drei, vier oder sechs Zahnbereiche aufweist und das Verhältnis K genau vier, sechs oder acht beträgt.

7. Indexiertes Scharniergelenk gemäss irgendeinem der vorhergehenden Ansprüche, worin der Teilungswinkel 5°, 2,5°, 2° oder 1° beträgt.

8. Indexiertes Scharniergelenk gemäss irgendeinem der vorhergehenden Ansprüche, worin die Zähne schräge Flanken aufweisen, welche sich unter einem Winkel treffen, der kleiner als oder gleich 90° ist.

9. Indexiertes Scharniergelenk gemäss irgendeinem der vorhergehenden Ansprüche, umfassend automatische Antriebsmittel zum Antreiben der Rotation des neu ausrichtbaren Elements um die erste Rotationsachse und/oder zum Sperren des Tragelements und des neu ausrichtbaren Elements durch gegenseitiges Anpressen.

10. Indexiertes Scharniergelenk gemäss irgendeinem der vorhergehenden Ansprüche, umfassend einen Winkelgeber, welcher zum Messen eines Rotationswinkels des neu ausrichtbaren Elements in Bezug auf das Tragelement um die erste Rotationsachse konfiguriert ist.

11. Indexiertes Scharniergelenk gemäss irgendeinem der vorhergehenden Ansprüche, umfassend einen axial verlaufenden Umfangsschutz, welcher an der ersten und/oder zweiten Komponente (310, 360) befestigt ist, um die modifizierte Hirth-Kupplung gegen Staub und/oder Flüssigkeitseintritt zu schützen, insbesondere ausgebildet als Faltenbalg.

12. Ein Kugelkopf (10) oder eine Sondenhalterung für die Neuausrichtung eines metrologischen Werkzeugs, welches auf einer Positionierungsplattform (45) eines Messsystems (40) montiert ist, wobei der Kugelkopf (10) oder die Sondenhalterung ein indexiertes Scharniergelenk gemäss einem der vorhergehenden Ansprüche umfasst, worin das Tragelement (100) auf der Positionierungsplattform (45) montiert werden kann.

13. Kugelkopf gemäss dem vorhergehenden Anspruch, mit einem zusätzlichen neu ausrichtbaren Element, welches drehbar mit dem neu ausrichtbaren Element verbunden ist, derart, dass eine Ausrichtung des zusätzlichen neu ausrichtbaren Elements in Bezug auf das neu ausrichtbare Element zwischen indexierten Ausrichtungen geändert und in einer dieser Ausrichtungen um eine zweite Rotationsachse, welche orthogonal zur ersten Rotationsachse ist, gesperrt werden kann, wobei das Werkzeug am zusätzlichen neu ausrichtbaren Element befestigt ist.

14. Ein Drehtisch für die Neuausrichtung eines Werkstücks (30) innerhalb eines Messvolumens eines Messsystems (40), wobei der Drehtisch ein indexiertes Scharniergelenk gemäss einem der Ansprüche 1 bis 11 umfasst, worin das Tragelement (100) auf einem Referenztisch (43) oder einer Oberfläche des Messsystems montiert werden kann.

15. Verwendung des Kugelkopfes gemäss irgendeinem der Ansprüche 12 und 13 in einer Koordinatenmessmaschine zur Neuausrichtung einer Messsonde.

## Revendications

1. Un joint articulé indexé (10) pour la réorientation d'un outil métrologique d'un appareil de mesure et/ou d'une pièce dans un volume de mesure d'un appareil de mesure, le joint articulé indexé (10) comprenant :
- un élément de support (100) susceptible d'être monté sur l'appareil de mesure ou sur un composant de celui-ci,
- un élément réorientable (200) relié en rotation à l'élément de support (100), dans lequel l'élément réorientable (200) peut être tourné par rapport à l'élément de support (100) autour d'un premier axe de rotation (70) entre et verrouillé dans l'une d'une pluralité d'orientations indexables séparées également par un angle de pas,
- un accouplement de Hirth modifié avec deux composants en engrènement mutuel (310, 360), l'un dans l'élément de support, l'autre dans l'élément réorientable, **caractérisé en ce que** un premier composant (310) de l'accouplement de Hirth modifié présente une pluralité de dents (321) espacées également d'un multiple, le multiple étant un nombre entier plus grand de l'unité, de l'angle de pas, un second composant (360) de l'accouplement de Hirth modifié présente trois secteurs dentés (370) ou plus séparés par des secteurs non-engrènants (375), chaque secteur denté (370) comprenant une pluralité de dents (371) espacées de l'angle de pas dans lequel, lorsque le premier composant (310) et le second composant (360) sont verrouillés ensemble dans l'une quelconque des positions indexées, chacun des secteurs dentés (370) s'engrène avec au moins une dent (321) du premier composant et il y a un jeu entre les secteurs non-engrènants (375) et le premier composant (310).

2. Le joint articulé indexé de la revendication précédente, dans lequel chaque secteur denté comprend au moins K dents, où K désigne un rapport entier entre l'espacement angulaire des dents adjacentes dans le premier composant et l'angle de pas.

3. Le joint articulé indexé de la revendication précédente, dans lequel chaque secteur denté comprend K+1 dents ou K+2 dents.

4. Le joint articulé indexé de l'une quelconque des revendications précédentes, dans lequel les secteurs dentés sont espacés également en angle.

5. Le joint articulé indexé de l'une quelconque des revendications précédentes, dans lequel au moins un des secteurs dentés est constitué d'un nombre différent de dents et/ou est inégalement espacé en angle.

6. Le joint articulé indexé de la revendication 2, dans lequel le second composant présente exactement trois, quatre ou six secteurs dentés et le rapport K est exactement quatre, six ou huit.

7. Le joint articulé indexé de l'une quelconque des revendications précédentes, dans lequel l'angle de pas est 5°, 2,5°, 2° ou 1°.

8. Le joint articulé indexé de l'une quelconque des revendications précédentes, dans lequel les dents ont des flancs obliques se rencontrant à un angle inférieur ou égal à 90°.

9. Le joint articulé indexé de l'une quelconque des revendications précédentes, comprenant des actionneurs automatiques pour entraîner la rotation de l'élément réorientable autour du premier axe de rotation et/ou pour verrouiller l'élément de support et l'élément réorientable ensemble en poussant l'un contre l'autre.

10. Le joint articulé indexé de l'une quelconque des revendications précédentes, comprenant un codeur d'angle configuré pour mesurer un angle de rotation de l'élément réorientable par rapport à l'élément de support autour du premier axe de rotation.

11. Le joint articulé indexé de l'une quelconque des revendications précédentes, comprenant une protection périphérique s'étendant axialement fixée au premier et/ou au second composant (310, 360) pour protéger l'accouplement de Hirth modifié contre la pénétration de poussière et/ou de fluide, notamment étant un soufflet.

12. Un poignet articulé (10) ou un porte-palpeur pour une réorientation d'un outil métrologique monté sur une plateforme de positionnement (45) d'un appareil de mesure (40), le poignet articulé (10) ou le porte-palpeur comprenant un joint articulé indexé selon l'une des revendications précédentes, dans lequel l'élément de support (100) est susceptible d'être monté sur la plateforme de positionnement (45).

13. Le poignet articulé de la revendication précédente, présentant un élément réorientable supplémentaire relié en rotation à l'élément réorientable de telle sorte qu'une orientation de l'élément réorientable supplémentaire par rapport à l'élément réorientable peut être modifiée entre, et verrouillée dans l'une de, une pluralité d'orientations indexables autour d'un second axe de rotation orthogonal au premier axe de rotation, l'outil étant fixé à l'élément réorientable supplémentaire.

14. Une table tournante pour la réorientation d'une pièce (30) dans un volume de mesure d'un appareil de mesure (40), la table tournante comprenant un joint articulé indexé selon l'une des revendications 1 à 11, dans lequel l'élément de support (100) est susceptible d'être monté sur une table de référence (43) ou sur une surface de l'appareil de mesure.

15. Utilisation du poignet articulé de l'une quelconque des revendications 12 et 13 dans une machine à mesurer par coordonnées pour réorienter un palpeur de coordonnées.
